(19) Europäisches Patentamt
European Patent Office
Office européen des brevets

(11) **EP 4 039 727 A1**

(12) **EUROPÄISCHE PATENTANMELDUNG**

(43) Veröffentlichungstag:
**10.08.2022 Patentblatt 2022/32**

(21) Anmeldenummer: **21155438.1**

(22) Anmeldetag: **05.02.2021**

(51) Internationale Patentklassifikation (IPC):
***C08G 64/30*** (2006.01)     ***C08G 65/26*** (2006.01)

(52) Gemeinsame Patentklassifikation (CPC):
**C08G 64/183; C08G 64/305; C08G 64/32; C08G 65/2603**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
• **Wolf, Aurel**
  **42489 Wülfrath (DE)**
• **Sebastian, Marina**
  **53507 Dernau (DE)**
• **Schuetze, Mike**
  **51379 Leverkusen (DE)**
• **Guertler, Christoph**
  **50735 Köln (DE)**

(74) Vertreter: **Levpat**
**c/o Covestro AG**
**Gebäude 4825**
**51365 Leverkusen (DE)**

(54) **VERFAHREN ZUR HERSTELLUNG VON POLYETHERCARBONATALKOHOLEN**

(57) Gegenstand der Erfindung ist ein Verfahren zur Herstellung von Polyethercarbonatalkoholen, enthaltend die Schritte

(1-i) Anlagerung von cycl. Carbonat an eine H-funktionelle Startersubstanz in Anwesenheit eines Katalysators unter Erhalt einer Reaktionsmischung enthaltend Polyethercarbonatalkohol,

(1-ii) Abtrennung des Katalysators von der resultierenden Reaktionsmischung aus Schritt (I-i),

(1-iii) gegebenenfalls Reinigung des Katalysators aus Schritt (1-ii),

(2-i) Anlagerung von cycl. Carbonat an eine H-funktionelle Startersubstanz in Anwesenheit des Katalysators aus Schritt (1-ii) oder (1-iii).

EP 4 039 727 A1

**Beschreibung**

Die vorliegende Erfindung betrifft ein Verfahren zur Herstellung von Polyethercarbonatalkoholen durch Anlagerung eines cyclischen Carbonats an eine H-funktionelle Starterfunktion in Anwesenheit eines Katalysators.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572), Zinn-Verbindungen, wie Zinndioxid oder Dibutylzinnoxid (DE 2 523 352), Alkalimetallcarbonate oder -acetate (DE 1 495 299 A1) durchgeführt.

Ebenfalls offenbart ist der Einsatz von Katalysatoren wie beispielsweise $Na_3VO_4$ und $Na_2WO_4$ für die Anlagerung cyclischen Ethylencarbonats an Monoethylenglykol und Diethylenglykol (R.F. Harris, Journal of Applied Polymer Science, 1989, 37, 183-200). Diese Anlagerung erfolgt nach dem Prinzip einer Ringöffnenden Polymerisation (auch ROP genannt) wobei Anteile des im cyclischen Carbonat gebundenen $CO_2$ bei der Polymerisation entweichen. Verfahren mit diesen Katalysatoren führen dementsprechend nicht zu alternierenden Polycarbonatpolyolen, sondern zu Polyethercarbonatalkoholen. Das im Stand der Technik offenbarte Verfahren ist für eine Produktion im großtechnischen Maßstab nicht geeignet, da es zu hohen Anteilen an Abfällen führt.

Aufgabe der vorliegenden Erfindung war deshalb die Bereitstellung eines Verfahrens zur Herstellung von Polyethercarbonatalkoholen, welches zu einem hohen Gehalt an $CO_2$-Gruppen im Polyethercarbonatalkohol führt und den Anteil an Abfall reduziert.

Die technische Aufgabe wird durch ein Verfahren zur Herstellung von Polyethercarbonatalkoholen, enthaltend die Schritte

(1-i) Anlagerung von cycl. Carbonat an eine H-funktionelle Startersubstanz in Anwesenheit eines Katalysators unter Erhalt einer Reaktionsmischung enthaltend Polyethercarbonatalkohol,
(1-ii) Abtrennung des Katalysators von der resultierenden Reaktionsmischung aus Schritt (1-i),
(1-iii) gegebenenfalls Reinigung des Katalysators aus Schritt (1-ii),
(2-i) Anlagerung von cycl. Carbonat an eine H-funktionelle Startersubstanz in Anwesenheit des Katalysators aus Schritt (1-ii) oder (1-iii).

Schritt (1-i):

In Schritt (1-i) wird durch Anlagerung von cycl. Carbonaten an eine H-funktionelle Startersubstanz in Anwesenheit eines geeigneten Katalysators eine Reaktionsmischung enthaltend Polyethercarbonatalkohol erhalten. Bei der Herstellung des Polyethercarbonatalkohols mit cycl. Carbonaten kann zunächst eine H-funktionelle Startersubstanz und cyclisches Carbonat im Reaktor vorgelegt werden. Es kann dabei auch nur eine Teilmenge der H-funktionellen Startersubstanz und/oder eine Teilmenge cyclischen Carbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Carbonat in den Reaktor gefüllt werden. Alternativ kann auch erst der Katalysator in einer H-funktionellen Startersubstanz suspendiert und anschließend die Suspension in den Reaktor gefüllt werden.

Der Katalysator wird vorzugsweise in einer Menge eingesetzt, so dass der Gehalt an Katalysator im resultierenden Reaktionsprodukt 10 bis 50000 ppm, besonders bevorzugt 20 bis 30000 ppm und höchst bevorzugt 50 bis 20000 ppm beträgt.

In einer bevorzugten Ausführungsform wird in das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C Inertgas (beispielsweise Argon oder Stickstoff) eingeleitet.

In einer alternativen bevorzugten Ausführungsform wird das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.

Der Katalysator kann in fester Form oder als Suspension in cyclischem Carbonat, in H-funktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Carbonat vorgelegt und in einem anschließenden zweiten Schritt die Temperatur der Teilmenge H-funktioneller Startersubstanz und des cyclischen Carbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein InertgasStrom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann bei einer Temperatur von 130°C bis 230°C, bevorzugt 140°C bis 200°C, besonders bevorzugt 160°C bis 190°C erhitzt, wobei gegebenenfalls ein InertgasStrom (beispielsweise von Argon oder Stickstoff) durch den Reaktor geleitet werden kann. Die Reaktion wird in der Regel solange fortgeführt bis bei der eingestellten Temperatur keine Gasentwicklung mehr beobachtet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).

Wurde nur eine Teilmenge an H-funktioneller Startersubstanz und/oder eine Teilmenge an cyclischem Carbonat in den Reaktor vorgelegt, erfolgt die Dosierung der restlichen Menge an H-funktioneller Startersubstanz und/oder cyclischen Carbonats in den Reaktor kontinuierlich. Es ist möglich, das cyclische Carbonat mit konstanter Dosierrate zu dosieren oder die Dosierrate allmählich oder schrittweise zu steigern oder zu senken oder das cyclische Carbonat portionsweise zuzugeben. Bevorzugt wird das cyclische Carbonat mit konstanter Dosierrate dem Reaktionsgemisch zugegeben. Die Dosierung des cyclischen Carbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt.

Die Polyethercarbonatalkohole können in einem batch, semi-batch oder kontinuierlichen Verfahren hergestellt werden. Bevorzugt werden die Polyethercarbonatalkohole in einem kontinuierlichen Verfahren hergestellt, das sowohl eine kontinuierliche Polymerisation als auch eine kontinuierliche Zugabe der H-funktionellen Startersubstanz umfasst.

Gegenstand der Erfindung ist daher auch ein Verfahren, wobei H-funktionelle Startersubstanz, cyclisches Carbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Polymerisations-Verfahrens vorhanden ist. Eine inkrementelle Zugabe von Katalysator und/oder Reaktand, der die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH, $-NH_2$ und $-CO_2H$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten und Wasser, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Soverml®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionelle Startersubstanz kann auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

Bevorzugt wird die H-funktionelle Startersubstanz so gewählt, dass als Polyethercarbonatalkohol ein Polyethercarbonatpolyol, d.h. ein Polyethercarbonatalkohol mit einer Funktionalität von 2 oder mehr, erhalten wird.

Katalysator

Als geeignete Katalysatoren für die Anlagerung von cyclischen Carbonat an H-funktionelle Startersubstanzen werden beispielsweise Katalysatoren gemäß Formel (I) eingesetzt

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $SnO_3^{2-}$, $CO_3^{2-}$, $RCOO^-$, $PO_4^{3-}$, $VO_3^-$, $WO_4^{2-}$, $MoO_4^{2-}$ und $VO_4^{3-}$,
n ist 1, wenn X = $VO_3^-$, $RCOO^-$,
n ist 2, wenn X = $SnO_3^{2-}$, $CO_3^{2-}$, $WO_4^{2-}$ oder $MoO_4^{2-}$,
n ist 3, wenn X = $PO_4^{3-}$ oder $VO_4^{3-}$,
R ein organischer Rest ist, bevorzugt C1 bis C12-Alkylrest.

Das Anion X des Katalysators ist bevorzugt $PO_4^{3-}$, $VO_3^-$, $WO_4^{2-}$, $MoO_4^{2-}$ oder $VO_4^3$, besonders bevorzugt $VO_3^-$, $VO_4^{3-}$ oder $PO_4^{3-}$. Als Alkalimetallkation M wird bevorzugt $Na^+$ oder $K^+$ eingesetzt. Der organische Rest R kann ein gesättigter oder ungesättigter, linearer oder verzweigter, aliphatischer oder cycloaliphatischer oder einen aromatischen oder araliphatischen Rest sein, der gegebenenfalls Heteroatome, wie N, S oder O enthalten kann. Bevorzugt handelt es sich bei dem organischen Rest R um einen C1 bis C12-Alkylrest, besonders bevorzugt handelt es sich um einen Methylrest. Ganz besonders bevorzugt wird als Katalysator eine Verbindung ausgewählt aus der Gruppe bestehen aus $Na_3VO_4$, $K_3VO_4$, $NaVO_3$, $KVO_3$, $Na_3PO_4$ und $K_3PO_4$ eingesetzt.

Schritt (1-ii):

Von dem aus Schritt (1-i) erhaltenen Reaktionsgemisch wird in Schritt (1-ii) der Katalysator abgetrennt. Die Abtrennung des Katalysators kann nach dem Fachmann bekannten Verfahren erfolgen. Bevorzugt werden dabei mechanische Trennverfahren wie Filtration eingesetzt.

Schritt (1-iii):

Gegebenenfalls kann der in Schritt (1-ii) abgetrennte Katalysator aufgereinigt werden. Die Aufreinigung des Katalysators erfolgt bevorzugt durch Abtrennung der polymeren Verunreinigung mittels Extraktion (bspw. Polare, aprotische organische Lösungsmitteln wie bspw. Aceton), anschließendem Waschen und anschließendem Trocknen mittels $N_2$ oder Vakuum.

Schritt (2-i):

Anschließend an Schritt (1-ii) oder (1-iii) wird der Katalysator wieder für die Anlagerung von cycl. Carbonat an eine H-fünktionelle Startersubstanz zur Herstellung eines Polyethercarbonatalkohols eingesetzt. Die allgemeine Beschreibung des Verfahrens zur Herstellung des Polyethercarbonatalkohols in Schritt (2-i) entspricht der Beschreibung zu Schritt (1-i). Die Durchführung des Verfahrens in Schritt (2-i) kann identisch zu Schritt (1-i) sein, wobei der Katalysator aus Schritt (1-ii) oder (1-iii) eingesetzt wird, oder unterschiedlich sein.

Die nach dem erfindungsgemäßen Verfahren erhaltenen Polyethercarbonatpolyole können beispielsweise durch Umsetzung mit Di- und/oder Polyisocyanaten zu Polyurethanen weiterverarbeitet werden.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten zu finden.

**Experimenteller Teil**

Experimentell ermittelte OH-Zahlen wurden gemäß der Vorschrift DIN 53240-2 (November 2007) bestimmt.

Das Molekulargewicht $M_n$ der entstandenen Polyethercarbonatpolyole wurde mittels Gelpermeationschromatographie (GPC) bestimmt. Es wurde nach DIN 55672-1 (August 2007): "Gelpermeationschromatographie, Teil 1 - Tetrahydrofuran als Elutionsmittel" vorgegangen und Polystyrolproben mit bekannter Molmasse zur Kalibrierung verwendet.

Der Anteil an eingebautem $CO_2$ im resultierenden Polyethercarbonatpolyol ($CO_2$-Gehalt) wurde mittels $^1$H-NMR Spektroskopie (Firma Bruker, AV III HD 600, 600 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR Spektrum (bezogen auf TMS = 0 ppm) sind wie folgt:

Für gebildete olefinische (Allylalkohol/Ether-Gruppen) werden die Signale bei 6,01-5,88 ppm sowie 5,37-5,10 ppm verwendet (Summe von beiden entspricht einem Integral von 3 Protonen). Das verbleibende monomere Propylencarbonat (Signal bei 1,51-1,49 ppm), für im Polyethercarbonatpolyol eingebautem Kohlendioxid (Resonanzen bei 1,31-1,27 und ggf.), Polyetherpolyol (d.h. ohne eingebautem Kohlendioxid) mit Resonanzen bei 1,14-1,10 ppm.

Der Molenanteil des im Polymer eingebauten Carbonats in der Reaktionsmischung wird nach Formel (II) wie folgt berechnet, wobei folgende Abkürzungen verwendet werden:

F(6,01-5,88) = Fläche der Resonanz bei 6,01-5,88 ppm für olefinische Allylalkohol/Ether Gruppen (1 Protonen)
F(5,37-5,10) = Fläche der Resonanz bei 5,37-5,10 ppm für olefinische Allylalkohol/Ether Gruppen (2 Protonen)
F(1,51-1,49) = Fläche der Resonanz bei 1,51-1,49 ppm für cyclisches Carbonat (entspricht 3 Protonen)
F(1,31-1,27) = Fläche der Resonanz bei 1,31-1,27 ppm für Polyethercarbonatpolyol (entspricht 3 Protonen)
F(1,14-1,10) = Fläche der Resonanz bei 1,14-1,10 ppm für Polyetherpolyol (entspricht 3 Protonen)

Unter Berücksichtigung der relativen Intensitäten wurde gemäß der folgenden Formel (II) für das polymer gebundene Carbonat ("lineares Carbonat" LC) in der Reaktionsmischung in mol% umgerechnet:

$$LC_{mol\%} = \frac{F(1,31-1,27)}{F(1,51-1,49)+F(1,31-1,27)+F(1,14-1,10)+F(6,01-5,88)+F(5,37-5,10)} \cdot 100\,\% \qquad (II)$$

Der Gewichtsanteil (in Gew.-%) polymer-gebundenen Carbonats (LC') in der Reaktionsmischung wurde nach Formel (III) berechnet,

$$LC'_{gew.\%} = \frac{[F(1,31-1,27)] \cdot 102}{N} \cdot 100\,\% \qquad (III)$$

wobei sich der Wert für $N$ ("Nenner" $N$) nach Formel (IV) berechnet:

$$N = (F(1,51-1,49) + F(1,51-1,49)) \cdot 102 + F(1,14-1,10) \cdot 58 + (F(6,01-5,88) + F(5,37-5,10)) * 44 \qquad (IV)$$

Der Faktor 102 resultiert aus der Summe der Molmassen von $CO_2$ (Molmasse 44 g/mol) und der von Propylenoxid (Molmasse 58 g/mol). Der Faktor 44 resultiert aus der Molmasse von Allylalkohol (44 g/mol)

Der Gewichtsanteil (in Gew.-%) an $CO_2$ im Polyethercarbonatpolyol wurde nach Formel (V) berechnet:

$$CO_{2\,gew.\%} = LC_{gew.\%} \cdot \frac{44}{102} \qquad (V)$$

Der molare Gehalt (in mol%) an olefinischen Produkten (Allylalkohol/Ether-Produkten) (OL) wurde gemäß der folgenden Formel bestimmt (VI)

$$OL_{mol\%} = \frac{F(6,01-5,88)+F(5,37-5,10)}{F(1,51-1,49)+F(1,31-1,27)+F(1,14-1,10)+F(6,01-5,88)+F(5,37-5,10)} \cdot 100\,\% \qquad (VI)$$

Der Gewichtsanteil (in Gew.-%) olefinischer Produkte (Allylalkohol/Ether-Produkte) (OL') in der Reaktionsmischung wurde nach Formel (VII) berechnet,

$$OL'_{gew.\%} = \frac{[F(6,01-5,88)+F(5,37-5,10)]\,44}{N} \cdot 100\,\% \qquad (VII)$$

wobei sich der Wert für *N* ("Nenner" *N*) nach Formel (IV) berechnet.

Um aus den Werten der Zusammensetzung der Reaktionsmischung die Zusammensetzung bezogen auf den Polymer-Anteil (bestehend aus Polyethercarbonatpolyol, aufgebaut aus Starter, cyclischem Propylencarbonat, wurden die Nicht-Polymer-Bestandteile der Reaktionsmischung (d.h. nicht umgesetztes cyclisches Propylencarbonat) rechnerisch eliminiert. Der Gewichtsanteil der Carbonat-Wiederholungseinheiten im Polyethercarbonatpolyol wurde in einen Gewichtsanteil Kohlendioxid mittels des Faktors $F=44/(58+44)$ umgerechnet (Siehe Formel V). Die Angabe des $CO_2$-Gehalts im Polyethercarbonatpolyol ("eingebautes $CO_2$"; siehe nachfolgende Beispiele) ist normiert auf das Polyethercarbonatpolyol-Molekül, dass bei der ringöffnenden Polymerisation entstanden ist.

Eingesetzte Rohstoffe:

Alle aufgezählten Chemikalien wurden vom genannten Hersteller in der angegebenen Reinheit erworben und ohne weitere Behandlung für die Synthese von Polyethercarbonatpolyolen verwendet.

cEC:   Cyclisches Ethylencarbonat (Sigma-Aldrich 99 %)

Polyetherpolyol 1:   Polyetherpolyol mit einer OH-Funktionalität von 2 und einer OH-Zahl von 515 mg KOH/g (Covestro Deutschland AG)

$Na_3VO_4$:   Natriumorthovanadat (abcr)

K3PO4:   Kaliumphosphat (Sigma-Aldrich 97 %)

**Beispiel 1: Herstellung eines Polyethercarbonatalkohols in Anwesenheit von $Na_3VO_4$**

Schritt (1-i):

In einem 600 L Reaktor mit Gasablass wurden 200 kg Ethylencarbonat, 80,7 kg Polyetherpolyol 1 und 2,08 kg $Na_3VO_4$ zugegeben. Der Reaktor wurde mit Stickstoff gespült. Anschließend wurde auf 150°C aufgeheizt, wobei sich die Reaktion durch austretendes $CO_2$ bemerkbar machte. Die Reaktionsmischung wurde bis zum vollständigen Umsatz bei der eingestellten Temperatur gerührt.

**Beispiel 1a: Wiederverwendung des Katalysators aus Beispiel 1 ohne Reinigung**

Schritt (1-ii):

Von der aus Schritt (1-i) von Beispiel 1 resultierenden Reaktionsmischung wurde durch Filtration über einen Filter T 2100 von Pall SUPRAdisc der Katalysator unter Erhalt eines Katalysator-Produkt-Gemisch enthaltend 9000 ppm des Katalysators abgetrennt.

Schritt (2-i):

In einem 250 mL Vierhalsglaskolben mit Rückflusskühler, KPG-Rührer, Thermofühler, Stickstoffzuleitung und Überdruckventil wurde die Reaktion analog zu Schritt (1-i) durchgeführt, wobei 30,5 g cEC, 12,4 g Polyetherpolyol 1 und 35,6 g Katalysator-Produkt-Gemisch (enthält 9000 ppm $Na_3VO_4$) aus Schritt (1-ii) von Beispiel 1 eingesetzt wurde.

**Beispiel 1b: Wiederverwendung des Katalysators aus Beispiel 1 mit Reinigung**

Schritt (1-ii):

Von der aus Schritt (1-i) von Beispiel 1 resultierenden Reaktionsmischung wurde durch Filtration über einen Filter T 2100 von Pall SUPRAdisc der Katalysator unter Erhalt eines Katalysator-Produkt-Gemisch enthaltend 9000 ppm des Katalysators abgetrennt.

Schritt (1-iii):

Das aus Schritt (1-ii) von Beispiel 1 abgetrennte Katalysator-Produkt-Gemisch wurde durch Zentrifugation auf ~30 Gew.% $Na_3VO_4$ im Katalysator-Produkt-Gemisch aufkonzentriert. Anschließend wurde das Gemisch in Aceton (100 mL) aufgenommen/suspendiert, filtriert und der Filterkuchen mit Aceton (100 mL) gewaschen und im Vakuum von Aceton befreit. Der gewonnene, und von Produktresten gereinigte Katalysator wurde in Schritt (2-i) eingesetzt.

Schritt (2-i):

In einem 250 mL Vierhalsglaskolben mit Rückflusskühler, KPG-Rührer, Thermofühler, Stickstoffzuleitung und Überdruckventil wurde die Reaktion analog zu Schritt (1-i) durchgeführt, wobei 98,2 g cEC, 39,5 g Polyetherpolyol 1 und 1,03 g $Na_3VO_4$ aus Schritt (1-iii) eingesetzt wurde.

**Beispiel 2: Herstellung eines Polyethercarbonatalkohols in Anwesenheit von $K_3PO_4$.**

Schritt (1-i):

In einem 500 mL Reaktor mit Gasablass wurden 100 g Ethylencarbonat, 25,3 g Laurinsäure (OH-Funktionalität von 1) und 2,4 g $K_3PO_4$ zugegeben. Der Reaktor wurde mit Stickstoff gespült. Anschließend wurde auf 170°C aufgeheizt, wobei sich die Reaktion durch austretendes $CO_2$ bemerkbar machte. Die Reaktionsmischung wurde bis zum vollständigen Umsatz bei der eingestellten Temperatur gerührt.

Schritt (1-ii):

Der Katalysator wurde von der aus Schritt (1-i) resultierenden Reaktionsmischung durch Zentrifugation abgetrennt, wobei ein Katalysator-Produkt-Gemisch enthaltend 85 Gew.-% $K_3PO_4$ erhalten wurde.

**Beispiel 2a: Wiederverwendung des Katalysators aus Beispiel 2 ohne Reinigung**

Schritt (2-i):

In einem 1000 mL Vierhalsglaskolben mit Rückflusskühler, KPG-Rührer, Thermofühler, Stickstoffzuleitung und Überdruckventil wurde die Reaktion analog zu Schritt (1-i) von Beispiel 2 durchgeführt, wobei 2,4 g $K_3PO_4$ aus Schritt (1-ii) eingesetzt wurde.

**Tabelle 1:**

| Beispiel | Katalysator | $M_n$ / g mol$^{-1}$ | PDI | Wt.% $CO_2$ |
|---|---|---|---|---|
| 1 | $Na_3VO_4$ | 611 | 2,02 | 25,8 |
| la | $Na_3VO_4$ | 626 | 2,04 | 25,2 |
| 1b | $Na_3VO_4$ | 644 | 2,08 | 24,0 |
| 2 | $K_3PO_4$ | 753 | 1,62 | 14,1 |
| 2a | $K_3PO_4$ | 696 | 1,77 | 13,8 |

Die Ergebnisse in Tabelle 1 zeigen, dass das erfindungsgemäße Verfahren zu hohen Anteilen an $CO_2$ im erhaltenen Polyethercarbonatalkoholen führt. In einer bevorzugten Ausführungsform ohne einen Reinigungsschritt (1-iii) werden ähnliche Anteile an $CO_2$ im Polyethercarbonatalkohol erhalten wie mit einem frischen Katalysator, wobei gleichzeitig der Anteil an Abfällen wie Produktresten deutlich reduziert wird.

**Patentansprüche**

1. Verfahren zur Herstellung von Polyethercarbonatalkoholen, enthaltend die Schritte

   (1-i) Anlagerung von cycl. Carbonat an eine H-funktionelle Startersubstanz in Anwesenheit eines Katalysators unter Erhalt einer Reaktionsmischung enthaltend Polyethercarbonatalkohol,
   (1-ii) Abtrennung des Katalysators von der resultierenden Reaktionsmischung aus Schritt (1-i),
   (1-iii) gegebenenfalls Reinigung des Katalysators aus Schritt (1-ii),
   (2-i) Anlagerung von cycl. Carbonat an eine H-funktionelle Startersubstanz in Anwesenheit des Katalysators aus Schritt (1-ii) oder (1-iii).

2. Verfahren gemäß Anspruch 1, **dadurch gekennzeichnet, dass** kein Schritt (1-iii) durchgeführt wird.

3. Verfahren gemäß Anspruch 1 oder 2, **dadurch gekennzeichnet, dass** als Katalysator eine Verbindung gemäß der Formel (I)

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $PO_4^{3-}$, $VO_3^-$, $WO_4^{2-}$, $MoO_4^{2-}$ und $VO_4^{3-}$,
n ist 1, wenn X = $VO_3^-$,
n ist 2, wenn X = $WO_4^{2-}$ oder $MoO_4^{2-}$
n ist 3, wenn X = $PO_4^{3-}$ oder $VO_4^{3-}$,
eingesetzt wird.

4. Verfahren gemäß Anspruch 3, **dadurch gekennzeichnet, dass** in Formel (I) M ausgewählt ist aus den Alkalimetallkationen $Na^+$ oder $K^+$.

5. Verfahren gemäß Anspruch 3, **dadurch gekennzeichnet, dass** in Formel (I) X ausgewählt ist aus den Anionen $PO_4^{3-}$, $VO^{3-}$ oder $VO_4^{3-}$.

6. Verfahren gemäß Anspruch 1 oder 2, **dadurch gekennzeichnet, dass** als Katalysator eine Verbindung ausgewählt aus der Gruppe bestehend aus $Na_3VO_4$, $K_3VO_4$, $NaVO_3$, $KVO_3$, $Na_3PO_4$ und $K_3PO_4$ eingesetzt wird.

7. Verfahren gemäß einem der Ansprüche 1 bis 6, **dadurch gekennzeichnet, dass** in Schritt (1-ii) der Katalysator durch Filtration oder Zentrifugation abgetrennt wird.

8. Verfahren gemäß einem der Ansprüche 1 bis 7 **dadurch gekennzeichnet, dass** als cyclisches Carbonat Propylencarbonat, Ethylencarbonat oder eine Mischung aus Propylencarbonat und Ethylencarbonat eingesetzt wird.

9. Verfahren gemäß einem der Ansprüche 1 bis 8, **dadurch gekennzeichnet, dass** die H-funktionelle Startersubstanz ein nach DIN 55672-1 (August 2007) gemessenes zahlenmittleres Molekulargewicht bis 10.000 g/mol, bevorzugt bis 5.000 g/mol, besonders bevorzugt bis 2.500 g/mol aufweist.

10. Verfahren gemäß einem der Ansprüche 1 bis 8, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3, Polyetherpolyole mit einem Molekulargewicht $M_n$ im Bereich von 150 bis 8000 g/mol und einer Funktionalität von 2 bis 3, Fettsäuren und Fettalkohole.

11. Verfahren gemäß einem der Ansprüche 1 bis 10, **dadurch gekennzeichnet, dass** der Katalysator in Schritt (1-i) und/oder Schritt (2-i) einem Anteil von 10 bis 50000 ppm, besonders bevorzugt 20 bis 30000 ppm und höchst bevorzugt 50 bis 20000 ppm vorliegt.

Europäisches
Patentamt

European
Patent Office

Office européen
des brevets

**EUROPÄISCHER RECHERCHENBERICHT**

Nummer der Anmeldung

EP 21 15 5438

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/001206 A1 (COVESTRO DEUTSCHLAND AG [DE]) 7. Januar 2016 (2016-01-07) | 1,2,7-11 | INV. C08G64/30 C08G65/26 |
| A | * Beispiel 1 * <br> * Seite 38 * <br> * Seite 1, Zeile 3 - Zeile 5 * <br> * Seite 25, Zeile 22 - Seite 26, Zeile 31 * <br> ----- | 3-6 | |
| A | ROBERT F. HARRIS: "Structural features of poly(alkylene ether carbonate) diol oligomers by capillary gas chromatography", JOURNAL OF APPLIED POLYMER SCIENCE, Bd. 37, Nr. 1, 5. Januar 1989 (1989-01-05), Seiten 183-200, XP055622074, US ISSN: 0021-8995, DOI: 10.1002/app.1989.070370114 * Seite 184; Beispiel Sample 2; Tabelle 1 * <br> ----- | 1-11 | |

| RECHERCHIERTE SACHGEBIETE (IPC) |
|---|
| C08G C09J |

Der vorliegende Recherchenbericht wurde für alle Patentansprüche erstellt

| Recherchenort | Abschlußdatum der Recherche | Prüfer |
|---|---|---|
| Den Haag | 7. Juli 2021 | Adigbli, Francis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 5438

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2021

| Im Recherchenbericht angeführtes Patentdokument | Datum der Veröffentlichung | Mitglied(er) der Patentfamilie | Datum der Veröffentlichung |
|---|---|---|---|
| WO 2016001206 A1 | 07-01-2016 | CN 106471040 A | 01-03-2017 |
| | | EP 3164442 A1 | 10-05-2017 |
| | | ES 2699843 T3 | 13-02-2019 |
| | | KR 20170029534 A | 15-03-2017 |
| | | SG 11201610701T A | 27-01-2017 |
| | | US 2017137569 A1 | 18-05-2017 |
| | | WO 2016001206 A1 | 07-01-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0343572 A
- DE 2523352
- DE 1495299 A1
- EP 1359177 A

**In der Beschreibung aufgeführte Nicht-Patentliteratur**

- **R.F. HARRIS.** *Journal of Applied Polymer Science,* 1989, vol. 37, 183-200